(19) Europäisches Patentamt
European Patent Office
Office européen des brevets

(11) **EP 3 827 268 B1**

(12) **EUROPÄISCHE PATENTSCHRIFT**

(45) Veröffentlichungstag und Bekanntmachung des Hinweises auf die Patenterteilung:
**08.11.2023   Patentblatt 2023/45**

(21) Anmeldenummer: **19755528.7**

(22) Anmeldetag: **22.07.2019**

(51) Internationale Patentklassifikation (IPC):
**G01P 5/26** *(2006.01)*      **G01P 3/36** *(2006.01)*
G01D 5/347 *(2006.01)*      G01D 5/00 *(2006.01)*
G01S 17/58 *(2006.01)*      G01S 17/95 *(2006.01)*
G01S 7/481 *(2006.01)*

(52) Gemeinsame Patentklassifikation (CPC):
**G01P 5/26; G01P 3/36;** G01D 5/34792;
G01D 2205/773; G01S 7/4816; G01S 17/58;
G01S 17/95; Y02A 90/10

(86) Internationale Anmeldenummer:
**PCT/EP2019/069724**

(87) Internationale Veröffentlichungsnummer:
**WO 2020/020846 (30.01.2020 Gazette 2020/05)**

(54) **VORRICHTUNG ZUR ERMITTLUNG EINER GESCHWINDIGKEITSKOMPONENTE EINES OBJEKTS**

APPARATUS FOR ASCERTAINING A VELOCITY COMPONENT OF AN OBJECT

DISPOSITIF POUR DÉTERMINER UNE COMPOSANTE DE VITESSE D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2018   DE 102018117776**

(43) Veröffentlichungstag der Anmeldung:
**02.06.2021   Patentblatt 2021/22**

(73) Patentinhaber: **Air Profile GmbH**
**34117 Kassel (DE)**

(72) Erfinder:
• **NEUBER, Daniel**
**34466 Wolfhagen (DE)**
• **ESCH, Arthur**
**37079 Göttingen (DE)**
• **PANIN, Paul**
**34121 Kassel (DE)**
• **SCHELLIEN, Tobias**
**Kassel 34125 (DE)**

(74) Vertreter: **Patentanwälte Olbricht Buchhold Keulertz**
**Partnerschaft mbB**
**Bettinastraße 53-55**
**60325 Frankfurt am Main (DE)**

(56) Entgegenhaltungen:
DE-A1- 2 248 542      GB-A- 1 118 879
US-A- 3 511 150      US-A1- 2002 093 641

EP 3 827 268 B1

**Beschreibung**

**Gebiet der Erfindung**

Die Erfindung betrifft eine Vorrichtung zur Ermittlung einer Geschwindigkeitskomponente eines Objekts, das sich in einem Abstand relativ zur Vorrichtung in einem Detektionsbereich bewegt und aus einer Lichtquelle stammendes Licht reflektiert, wobei das Objekt reflektiertes Licht erzeugt, das von dem Detektionsbereich ausgeht.

**Hintergrund der Erfindung**

In zahlreichen Anwendungsgebieten ist die Erfassung der Geschwindigkeit eines Objekts notwendig oder gewünscht, beispielsweise die Geschwindigkeit eines Fahrzeugs oder einer Person, die Strömungsgeschwindigkeit einer Flüssigkeit oder die Windgeschwindigkeit in einer bestimmten Höhe über dem Boden.

Im Bereich der Messung von Windgeschwindigkeiten wird oft ein Schalenkreuzanemometer verwendet. Dieses besteht aus drei oder vier halbkugelförmigen Hohlschalen auf einer vertikalen Drehachse. Es erzeugt nach dem Widerstandsprinzip ein elektrisches Signal, aus dem die Windgeschwindigkeit berechnet wird. Eine zusätzliche Windfahne dient der Ermittlung der Windrichtung.

Für die Messung von Windgeschwindigkeiten wurden sogenannte LiDAR-Systeme entwickelt (Light Detection And Ranging). Das von einem Laser ausgesendete Licht wird an Luftpartikeln (Aerosolen) in der Luftströmung reflektiert und von einer Messvorrichtung empfangen und ausgewertet. Mittels einer Frequenzanalyse wird die Geschwindigkeit des Aerosols und damit die des Windes bestimmt. Die Genauigkeit dieser Geräte ist nur unter gewissen physikalischen Annahmen ausreichend und muss durch regelmäßige Vergleichsmessungen mit Referenz-Messmasten verifiziert werden. Hinzu kommt, dass herkömmliche LiDAR-Systeme ungeeignet sind, transversale Geschwindigkeitskomponenten zu erfassen.

Um dem zu begegnen wurden LiDAR-Systeme entwickelt, die den longitudinalen DopplerEffekt ausnutzen. Zur Ermittlung einer transversalen Geschwindigkeitskomponente wird der Laser um ca. 15° gegen seine vertikale Achse geneigt und um diese Achse rotiert. Der Laserstrahl beschreibt somit einen Messkegel, über den die zum Laserstrahl longitudinale Komponente der Windgeschwindigkeit gemessen und daraus ein Mittelwert der horizontalen Windgeschwindigkeit berechnet wird. Problematisch hierbei ist jedoch, dass der Durchmesser des Messkegels bei zunehmender Höhe immer größer wird. Hinzu kommt, dass die Messungen in stark strukturierten Topographien (mit Hügeln, Wäldern, Tälern und Gebäuden) nicht ausreichend genau sind.

EP 2 062 058 A1 schlägt eine Vorrichtung zur Messung einer transversalen Geschwindigkeitskomponente mit hoher Ortsauflösung vor, die für Entfernungen von bis zu 500 m vorgesehen sein soll. Ein kollimierter Laserstrahl wird in Richtung eines Detektionsbereichs ausgesendet, wobei die Gitterstruktur eines Modulators in den Detektionsbereich projiziert wird. Die Bewegung eines Objekts, beispielsweise eines Luftpartikels, durch die projizierte Gitterstruktur im Detektionsbereich wird als periodisches Hell-Dunkel-Signal von der Vorrichtung erfasst, aus dessen Frequenz eine Transversalkomponente der Geschwindigkeit des Windes errechnet wird.

Von Nachteil hierbei ist, dass ein Großteil der Laserleistung durch den Modulator absorbiert wird, so dass ein entsprechend leistungsstarker Laser verwendet werden muss. Um beide Komponenten einer transversalen Geschwindigkeit zu erfassen, sind zudem zwei Messungen erforderlich, wobei der Modulator um 90° verdreht werden muss. Die Vorrichtung bietet ferner nur eingeschränkte Möglichkeiten zur Parametrisierung, wodurch die Einstellbarkeit auf unterschiedliche Messdistanzen erschwert und die Messgenauigkeit eingeschränkt ist.

Die US 2002/093641 A1, die DE 22 48 542 A1 und die GB 1 118 879 A beschreiben ähnliche Vorrichtungen zur Messung der Geschwindigkeit eines Objekts,

**Aufgabe der Erfindung**

Aufgabe der Erfindung ist es, diese und weitere Nachteile des Standes der Technik zu überwinden und eine Vorrichtung zur Ermittlung einer Geschwindigkeitskomponente eines Objekts zu schaffen, die mit einfachen Mitteln kostengünstig aufgebaut ist und eine ebenso effiziente wie wirtschaftliche Messung von Objektgeschwindigkeiten, insbesondere von Windgeschwindigkeiten in großen Höhen, ermöglicht. Angestrebt werden ferner eine hohe, an den jeweiligen Anwendungsfall anpassbare Ortsauflösung sowie eine hohe Messgenauigkeit.

**Erfindungsgemäße Lösung der Aufgabe**

Hauptmerkmale der Erfindung sind in Anspruch 1 angegeben. Ausgestaltungen sind Gegenstand der Ansprüche 2 bis 12.

Die erfindungsgemäße Lösung schafft eine Vorrichtung zur Ermittlung einer Geschwindigkeitskomponente, insbesondere einer transversalen Geschwindigkeitskomponente eines Objekts, das sich in einer Messdistanz relativ zur Vorrichtung in einem Detektionsbereich bewegt und aus einer Lichtquelle stammendes Licht reflektiert, wobei das Objekt reflektiertes Licht erzeugt, das von dem Detektionsbereich ausgeht,

- mit einem Objektiv, einem Modulator, einer Empfangsoptik und einem Lichtdetektor,
- wobei das Objektiv das von dem Objekt im Detektionsbereich erzeugte reflektierte Licht erfasst und auf den Modulator abbildet,
- wobei der Modulator das reflektierte Licht in eine Abfolge von Lichtsignalen moduliert,
- wobei die Empfangsoptik die von dem Modulator erzeugte Abfolge von Lichtsignalen auf den Lichtdetektor abbildet, und
- wobei der Lichtdetektor die Abfolge von Lichtsignalen in eine Abfolge von elektronischen Signalen umwandelt, und
- mit einer Schnittstelle, welche die von dem Lichtdetektor erzeugte Abfolge von elektronischen Signalen an eine Auswerteeinheit weiterleitet.

Die Vorrichtung erfasst damit das von einem Objekt reflektierte Licht, wobei sich das Objekt - beispielsweise ein Fahrzeug, eine Person, ein Flüssigkeitstropfen, ein Aerosolpartikel, ein Aerosol, o.dgl., durch einen von der Vorrichtung definierten Detektionsbereich hindurch bewegt. Dieses reflektierte Lichtsignal wird von dem Objektiv auf den Modulator abgebildet, von diesem moduliert und anschließend mittels der Empfangsoptik als Abfolge von Lichtsignalen auf den Lichtdetektor abgebildet. Dieser erfasst mithin eine Abfolge von Lichtintensitätsänderungen, aus deren Frequenz - nach Umwandlung der Lichtsignale in elektronische Signale - mittels der Auswerteeinheit die Geschwindigkeit des Objekts berechnet werden kann.

Die Anordnung der Komponenten der erfindungsgemäßen Vorrichtung ermöglicht einen kompakten Aufbau, der gegenüber den bislang bekannten Systemen sehr viel kostengünstiger realisierbar ist. Die Vorrichtung ist äußerst robust und durch den Modulator entstehen keine störenden Interferenzen. Die von dem Modulator erzeugte Abfolge von Lichtsignalen kann vielmehr rasch und bequem auf jede empfangene Lichtreflexion moduliert werden. Mit dem Objektiv lässt sich auf einfache Weise der Detektionsbereich im Abstand zur Vorrichtung definieren. Zudem kann die Vergrößerung des auf dem Modulator ausgebildeten Gittermusters mittels der Brennweite des Objektivs gesteuert werden. Durch eine deutlich höhere Lichtintensität des einfallenden reflektierten Lichts und eine entsprechend höhere Strahlleistung vereinfacht sich die Detektion der Abfolge von Lichtsignalen, die der Modulator erzeugt und über die Empfangsoptik auf dem Lichtdetektor abbildet. Die Vorrichtung lässt sich leicht reproduzieren, weil die Kalibrierung der Empfangsoptik mit geringem Aufwand verbunden ist. Darüber hinaus bietet die Vorrichtung eine Vielzahl von Optionen zur Parametrisierung, wodurch die Vorrichtung schnell und einfach für eine geplante Messdistanz ausgelegt werden kann. Die Herstellung der Vorrichtung ist damit im Vergleich zu herkömmlichen Systemen äußerst wirtschaftlich.

Die Ausführungsform der Erfindung sieht vor, dass das Objektiv, der Modulator, die Empfangsoptik und der Lichtdetektor auf einem optischen Empfängerpfad angeordnet sind. Dies ermöglicht eine äußerst kompakte und stabile Anordnung der einzelnen Komponenten, wobei es weiter von Vorteil ist, wenn der Empfängerpfad, auf dem das Objektiv, der Modulator, die Empfangsoptik und der Lichtdetektor angeordnet sind, innerhalb der Vorrichtung ausgebildet ist. Dadurch lassen sich die Abmessungen der Vorrichtung deutlich reduzieren.

Gemäß einer weiteren wichtigen Ausgestaltung der Erfindung bildet das Objektiv den Detektionsbereich mit einer definierten Schärfentiefe auf den Modulator ab.

Das Objektiv dient dem Empfang der von dem Objekt reflektierten Lichtsignale, wenn sich das Objekt durch den Detektionsbereich hindurch bewegt. Der Detektionsbereich wird daher von dem Objektiv definiert, indem über die Brennweite und den Fokus die Messdistanz, d.h. der Abstand zwischen der Vorrichtung und dem Detektionsbereich, festgelegt wird.

Bevorzugt verwendet man als Objektiv Spiegellinsenobjektive (katadioptrische Objektive), weil diese eine große Brennweite mit geringer Baulänge kombinieren. Die Auswahl eines geeigneten Objektivs ist jedoch nicht auf den genannten Typ beschränkt.

Die Schärfentiefe des Objektivs definiert den Distanzbereich, über den das Objektiv das Objekt im Detektionsbereich, z. B. ein Aerosolpartikel, scharf auf den Modulator abbilden kann. Der Bereich der Schärfentiefe wird gewöhnlich begrenzt durch einen Nahpunkt in einem Abstand $d_n$ vom Objektiv, der kleiner ist als die Messdistanz g, und einen Fernpunkt in einem Abstand df vom Objektiv, der größer ist als die Messdistanz g.

Die Schärfentiefe

$$h = d_f - d_n \qquad\qquad (1)$$

ergibt sich somit aus der Differenz des Abstandes zum Fernpunkt

$$d_f = \frac{g(d_h - f)}{(d_h - f) + (f - g)} \qquad (2)$$

und des Abstandes zum Nahpunkt

$$d_n = \frac{g(d_h - f)}{(d_h - f) + (g - f)} \qquad (3)$$

Darin sind $d_h$ die Hyperfokaldistanz und f die Brennweite des Objektivs und g die Messdistanz.

Damit definiert die Vorrichtung über das Objektiv den Detektionsbereich in einer bestimmten Entfernung - der Messdistanz, wobei in Abhängigkeit von der Schärfentiefe h und den Abständen df und $d_n$ der Zeitbereich der detektierten Photonen, der zur Signalauswertung herangezogen wird, angepasst werden kann.

Eine weitere Ausführungsform der Erfindung sieht vor, dass das Objektiv das von dem Objekt reflektierte Licht auf einen definierten Bereich des Modulators abbildet. Dabei ist der Modulator vorzugsweise in der Brennebene, d.h. in der Bildebene des Objektivs angeordnet.

Der Modulator ist gemäß einer Weiterbildung der Erfindung mit einem Muster aus sich abwechselnden opaken und nicht-opaken Linien versehen. Diese Linien haben definierte Breiten $b_{op}$ und $b_{nop}$ und werden nachfolgend auch als Gitter bezeichnet.

Das Gitter des Modulators ist durch eine Grundgitterkonstante $G_0$ gekennzeichnet, die durch den Linienabstand zweier benachbarter Linien gleicher Art gegeben ist. Die Linienbreiten $b_{op}$ und $b_{nop}$ sind so zu wählen, dass das zu beobachtende Objekt durch eine opake Linie vollständig verdeckt wird und durch eine nichtopake Linie vollständig sichtbar ist. Die Linienbreiten sind somit in Abhängigkeit von der jeweiligen Messaufgabe zu dimensionieren.

Bei Messungen der Windgeschwindigkeit können zu beobachtende Aerosolpartikel als punktförmig betrachtet werden, so dass die Linienbreiten sehr klein gewählt werden können, bis hinunter zu wenigen Mikrometern. Bei Messungen der Geschwindigkeit von ausgedehnten Objekten, z. B. von Fahrzeugen, muss die Linienbreite unter Berücksichtigung der maximalen Fahrzeuglänge und der Messdistanz bestimmt werden.

Von besonderem Vorteil ist die Ausbildung des Modulators mit einem Muster aus abwechselnd opaken und nicht-opaken Linien, wobei die opaken und nichtopaken Linien in Form von archimedischen Spiralen ausgebildet sind. Wird dem Modulator ein orthogonales Koordinatensystem mit den Achsen x und y zugeordnet, so können zwei Bereiche auf dem Modulator anvisiert werden, in denen annähernd parallele spiralförmige Linien senkrecht zur x-Achse bzw. senkrecht zur y-Achse verlaufen. Dadurch ist es möglich, mit nur einem Modulator zwei unterschiedliche, bevorzugt senkrecht aufeinander stehende, Bewegungsrichtungen zu modulieren, insbesondere dann, wenn der Modulator um eine Achse drehbar gelagert ist.

In einer vereinfachten Ausführungsform ist der Modulator innerhalb der Vorrichtung fixiert.

Ergänzend oder alternativ kann der Modulator entlang des optischen Empfängerpfades längsverschieblich angeordnet sein.

Eine weitere Ausgestaltung der Erfindung sieht vor, dass die Empfangsoptik ein Linsensystem umfasst. Dieses gewährleistet die Fokussierung der von dem Modulator erzeugten Abfolge von Lichtsignalen auf den Lichtdetektor, wobei dieser in der Brennebene, d.h. in der Bildebene der Empfangsoptik angeordnet ist.

Das Linsensystem umfasst mindestens eine Linse, wobei die Empfangsoptik zudem ein optisches Filter und/oder eine Irisblende aufweisen kann. Die Irisblende dient zur Einstellung des Durchmessers $d_{Obj}$ des vom Objektiv erfassten Detektionsbereichs. Das optische Filter eliminiert Streulicht aus der Umgebung, welches in das Objektiv gelangt.

Der Durchmesser des Detektionsbereichs $d_{Obj}(g)$ ist in Abhängigkeit von der Messdistanz g und dem Öffnungsdurchmesser b der Irisblende wie folgt definiert:

$$d_{Obj}(g) = V(g) \cdot b \qquad (4)$$

Darin beschreibt

$$V(g) = g \cdot \left( \frac{1}{f} - \frac{1}{g} \right) \qquad (5)$$

die Vergrößerung des Feldes des Detektionsbereichs in der Messdistanz g für ein Objektiv mit der Brennweite f.

Die Empfangsoptik kann ferner einen Transmissionsbereich aufweisen, der auf die Wellenlänge der Lichtquelle eingestellt ist, d.h. mittels der Empfangsoptik besteht die Möglichkeit, eine wellenlängenspezifische Filterung vorzunehmen.

Je nach Anwendungsfall ist der Lichtdetektor beispielsweise ein Photodetektor oder ein Pfhotomultiplier, der auch Lichtsignale sehr geringer Intensität bis hinunter zu einzelnen Photonen registrieren und in elektrische Signale umwandeln kann.

Eine weitere Ausgestaltung der Erfindung sieht vor, dass das von dem Lichtdetektor erzeugte Signal verstärkt wird. Dazu kann ein Verstärker vorgesehen sein, der entweder dem Lichtdetektor, der Schnittstelle oder der Auswerteeinheit zugeordnet ist.

Die Ausführungsform der Erfindung sieht vor, dass zwischen dem Objektiv und dem Modulator ein Strahlteiler angeordnet ist, der das von dem Objekt reflektierte Licht in zwei Teilstrahlen aufteilt.

Hierbei sieht die Erfindung weiter vor, dass das Objektiv die von dem Strahlteiler erzeugten Teilstrahlen in einen ersten Bereich und in einen zweiten Bereich des Modulators abbildet, wobei sich die Bereiche nicht überlappen. Ferner moduliert der Modulator die Teilstrahlen in eine erste und eine zweite Abfolge von Lichtsignalen, wobei die Empfangsoptik die von dem ersten Bereich des Modulators erzeugte Abfolge der ersten Lichtsignale auf den Lichtdetektor abbildet, während eine zweite Empfangsoptik die von dem zweiten Bereich des Modulators erzeugte Abfolge der zweiten Lichtsignale auf einen zweiten Lichtdetektor abbildet.

Die zweite Empfangsoptik und der zweite Lichtdetektor sind auf einem zweiten optischen Empfängerpfad angeordnet, wobei der Empfängerpfad und der zweite Empfängerpfad parallel angeordnet sind.

Damit ist es möglich, zwei transversale Geschwindigkeitskomponenten eines Objekts zu ermitteln, z. B. bei der Vermessung eines Windfeldes.

Wird noch dazu der Modulator genau einmal um seine Achse gedreht (Drehwinkel 360°), so wird jeder der beiden Bereiche genau einmal von allen auf dem Modulator ausgebildeten spiralförmigen Linien durchlaufen. Wird der Modulator überdies mit einer Drehfrequenz n zur Rotation gebracht, so werden die genannten Bereiche mit einer Frequenz $f_0 = n \cdot N_{Sp}$ von den spiralförmigen Linien durchlaufen, wobei diese sich im ersten Bereich in Richtung der x-Achse, im zweiten Bereich - um 90° verdreht - in Richtung der y-Achse bewegen.

Die hinter dem Modulator angeordnete Empfangsoptik und die zweite Empfangsoptik, jeweils mit nachgeschaltetem Lichtdetektor, registrieren damit im Falle eines unbewegten zur Rückstreuung angeregten Objekts ein Signal mit der Frequenz $f_0$. Daher wird diese Frequenz als Nullfrequenz $f_0$ bezeichnet.

Während es für zahlreiche Anwendungen ausreicht, wenn die Lichtquelle eine natürliche Lichtquelle ist, wie beispielsweise das Umgebungslicht oder das Sonnenlicht, sieht eine weitere wichtige Ausführungsform der Erfindung vor, dass die Lichtquelle für das zu reflektierende Licht ein Laser oder eine inkohärente Lichtquelle ist.

Für Geschwindigkeitsmessungen an größeren Objekten, z.B. Fahrzeugen oder Personen, ist bei ausreichender Beleuchtung, z.B. durch das Tageslicht, keine gesonderte Lichtquelle erforderlich. Man kann aber, wenn die Lichtverhältnisse nicht ausreichen, d.h. wenn die Lichtintensität auf dem Empfängerpfad nicht ausreichend sind, eine künstliche Lichtquelle verwenden. Hierbei kann es sich um einen Laser oder eine inkohärente Lichtquelle handeln. Für die Messung der Strömungsgeschwindigkeit einer Flüssigkeit kann beispielsweise ein cw-Laser oder eine inkohärente Lichtquelle verwendet werden.

Für Messungen der Windgeschwindigkeit wird vorzugsweise ein Pulslaser verwendet.

Damit das von der Lichtquelle emittierte Licht auf das zu vermessende Objekt fällt, ist eine Spiegeloptik vorgesehen, welche das von der Lichtquelle ausgehende Licht in Richtung Detektionsbereich lenkt. Hierbei ist es zudem von Vorteil, wenn die Spiegeloptik das von der Lichtquelle ausgehende Licht in die optische Achse des Objektivs lenkt.

Die Erfindung sieht ferner vor, dass eine Abbildungsoptik vorgesehen ist, welche das von der Lichtquelle ausgehende Licht kollimiert, wobei die Abbildungsoptik vorzugsweise ein Linsensystem umfasst.

Das Linsensystem dient der Formung (Aufweitung und Kollimierung) des von der Lichtquelle erzeugten Lichtsignals. Die Auslegung des Linsensystems erfolgt anhand des folgenden Zusammenhangs:

$$d(g) = d_0 + g \cdot \varphi \qquad (6)$$

Die angegebene Gleichung beschreibt den Durchmesser des Laserstrahls $d(g)$ in Abhängigkeit von der Messdistanz g, dem Durchmesser $d_0$ des auslaufenden Laserstrahls nach der Formung und dem durch das Linsensystem bestimmten Divergenzwinkel $\varphi$ dieses Laserstrahls.

Die Lichtquelle, die Abbildungsoptik und die Spiegeloptik liegen in einer weiteren Ausgestaltung der Erfindung auf einem optischen Sendepfad. Dieser dient damit der Ausleuchtung des in der vorgegebenen Messdistanz befindlichen Detektionsbereichs, so dass ein dort befindliches, sich ggf. bewegendes Objekt zur Rückstreuung von reflektiertem Licht in Richtung des Empfängerpfads angeregt wird.

Der Sendepfad und der Empfängerpfad sind in einer weiteren Ausbildung der Erfindung am Ausgang der Vorrichtung vor dem Objektiv auf einer optischen Achse zusammengeführt. Dies trägt ebenfalls zu einer äußerst kompakten Bauform der Vorrichtung bei.

In speziellen Anwendungsfällen, z. B. bei der Messung einer Fahrzeuggeschwindigkeit bei Tageslicht, kann bereits das Umgebungslicht ausreichen, um den Detektionsbereich hinreichend auszuleuchten. In solchen Fällen kann auf den Sendepfad und die darin befindliche Anordnung verzichtet werden.

In der Regel ist aber eine Ausleuchtung des Detektionsbereichs unter Verwendung einer Lichtquelle und der Komponenten auf dem Sendepfad erforderlich.

Für eine kompakte Ausbildung der Vorrichtung ist weiter vorgesehen, dass die Lichtquelle, die Abbildungsoptik und/oder die Spiegeloptik innerhalb der Vorrichtung angeordnet sind.

Um das von dem Lichtdetektor erzeugte Signal, namentlich die Abfolge von aus den Lichtsignalen erzeugten elektronischen Signale, weiter verarbeiten zu können, ist die Schnittstelle vorgesehen. Diese ist über eine Kabelverbindung oder über eine Funkstrecke mit der Auswerteeinheit verbunden.

Die Auswerteeinheit, beispielsweise ein Computer oder Laptop, kann außerhalb und separat von der Vorrichtung ausgebildet sein. In diesem Fall ist die Schnittstelle über ein Kabel mit dem Computer oder Laptop verbunden. Man kann aber auch eine Funkstrecke, beispielsweise eine Infrarotverbindung oder Bluetooth-Verbindung verwenden.

Die Auswerteeinheit kann aber auch Bestandteil der Vorrichtung sein. In diesem Fall ist die Schnittstelle bevorzugt über eine Kabelverbindung mit der Auswerteeinheit verbunden.

Die Auswerteeinheit weist zweckmäßig einen Speicher auf, der die von dem Lichtdetektor erzeugten Abfolgen von elektronischen Signalen speichert, wobei die Auswerteeinheit aus den Abfolgen dieser elektronischen Signale die Geschwindigkeitskomponenten des Objekts berechnet.

In dem Datenspeicher der Auswerteeinheit wird der zeitliche Verlauf von mindestens einem elektrischen Signal aufgezeichnet und analysiert. Ferner werden die ermittelten Geschwindigkeiten als Funktion der Zeit abgespeichert dem Anwender angezeigt oder in elektronischer Form übermittelt.

Die Performance der erfindungsgemäßen Vorrichtung wird im Wesentlichen von der Lichtquelle, dem Objektiv, dem Modulator und dem Photodetektor bestimmt, namentlich von deren Eigenschaften (Parametrisierung).

Eine Grundlage für diese Parametrisierung bildet die aus "Laser Remote Sensing", Hrsg.: Takashi Fujii, Tetsuo Fukuchi, CRC Press (2005), S. 487, Formel 7.2, bekannte LiDAR-Gleichung

$$P_S = \eta_t \cdot \eta_x \cdot E_x \cdot O(g) \cdot T^2 \left(\frac{c\beta}{2}\right)\left(\frac{A_R}{g^2}\right) \qquad (7)$$

mit den in Tabelle 1 erläuterten Parametern.

Tabelle 1: Parameter der LiDAR-Gleichung

| $P_S$ | Gesammelte Leistung über die Apertur D des Objektivs |
|---|---|
| $E_x$ | Pulsenergie |
| $\eta_t$ | Transmissionsverluste |
| $\eta_x$ | Empfangsverluste |
| T | Atmosphärische Transmissionsverluste |
| $\beta$ | Rückstreukoeffizient des beobachteten Objekts im Detektionsbereich |
| $O(g)$ | Überlappungsfunktion (des Laserstrahls mit dem Detektionsbereich) |
| $A_R$ | Fläche der Apertur D des Objektivs: $A_R = (1/4)\pi D^2$ |
| g | Distanz vom Objektiv zum Detektionsbereich (= Messdistanz) |
| c | Lichtgeschwindigkeit im Medium (z. B. in Luft oder einer Flüssigkeit) |

Darin sind $\eta_t$ und $\eta_x$ systembedingte Konstanten, bestimmt insbesondere durch die Linsensysteme im Sendepfad und Empfängerpfad. T, $\beta$, g, c sind anwendungsspezifische Konstanten. Soll bei mehreren Messdistanzen g gearbeitet werden, so ist die größte Messdistanz in die LiDAR-Gleichung einzusetzen. $O(g)$ beschreibt die Überlappung des Querschnitts des Detektionsbereichs mit dem Querschnitt des Laserstrahls. Es wird von einer optimalen Überlappung ausgegangen, die $O(g) = 1$ entspräche. Dieser Wert reduziert sich auf $O(g) = 0,5$, da 50 % der vom Objektiv gesammelten Leistung beim Durchgang durch den Modulator verlorengehen.

Der Einsatz der erfindungsgemäßen Vorrichtung bei einer Windmessung stellt sich wie folgt dar:

An einem ausgewählten Standort wird mit der Vorrichtung - die mit einer entsprechenden Lichtquelle ausgestattet ist - in einer vorgegebenen Messdistanz ein von dem Objektiv vorgegebener Detektionsbereich ausgeleuchtet, vorzugsweise mit kollimiertem Laserlicht.

Ein Objekt, das sich in diesem Detektionsbereich befindet oder sich durch diesen hindurch bewegt, z.B. ein Aerosolpartikel, wird von dem Laserlicht getroffen. Das Objekt reflektiert das auftreffende Licht und erzeugt damit reflektiertes Licht, das von dem Detektionsbereich ausgeht und auf das Objektiv der Vorrichtung trifft.

Das auf den Detektionsbereich fokussierte Objektiv bildet das reflektierte Licht auf einen Bereich des vorzugsweise rotierenden Modulators ab. Dessen Gittermuster bewegt sich hierbei mit einer Frequenz $f_0$, die von der Ausführung des Gittermusters und von der Drehfrequenz des Modulators bestimmt wird. Anschaulich lässt sich dieser Vorgang als eine Rückwärtsprojektion des vom Rückstreusignal durchlaufenden Bereichs des Modulators in den Detektionsbereich beschreiben.

Das Gittermuster - aus äquidistanten parallelen opaken und nicht-opaken Linien - wird somit in den in der Messdistanz g befindlichen Detektionsbereich projiziert, wobei es auf eine Gitterkonstante G vergrößert wird, die so eingestellt wird, dass das Gitter den Detektionsbereich vollständig abdeckt.

Für die Vergrößerung V der Gitterkonstanten G gilt der Zusammenhang:

$$G(g) = V(g) \cdot G_0 \qquad\qquad (8)$$

Befindet sich ein ruhendes rückstreuendes Objekt im Detektionsbereich, so erzeugt es hinter dem Modulator ein Signal mit der Nullfrequenz $f_0$.

Bewegt sich das Objekt mit einer Geschwindigkeit v durch die x-y-Ebene, ändern sich die von den Photodetektoren gemessene Frequenzen zu

$$f_x = f_0 + \Delta f_x = n \cdot N_{Sp} + v_x/G \qquad\qquad (9)$$

$$f_y = f_0 + \Delta f_y = n \cdot N_{Sp} + v_y/G \qquad\qquad (10)$$

Dabei sind

$$\Delta f_x = v_x/G \qquad\qquad (11)$$

und

$$\Delta f_y = v_y/G \qquad\qquad (12)$$

die Frequenzänderungen der beiden Teilsignale gegenüber der Nullfrequenz $f_0$.

Aus ihnen können bei bekannter Gitterkonstante G unmittelbar die Komponenten $v_x$ und $v_y$ der Geschwindigkeit des punktförmigen Objekts in x-Richtung und in y-Richtung berechnet werden.

Die Frequenzverschiebungen $\Delta f_x$ bzw. $\Delta f_y$ sind positiv, wenn das punktförmige Objekt eine der Bewegungsrichtung der spiralförmigen Linien entgegen gerichtete Geschwindigkeitskomponente $v_x$ bzw. $v_y$ aufweist, sie sind negativ, wenn das punktförmige Objekt eine der Bewegungsrichtung der spiralförmigen Linien gleichgerichtete Geschwindigkeitskomponente $v_x$ bzw. $v_y$ aufweist. Betrag |v| und Richtung $\alpha$ der Geschwindigkeit des punktförmigen Objekts sind in bekannter Weise aus den Geschwindigkeitskomponenten $v_x$ und $v_y$ berechenbar:

$$|v| = \sqrt{v_x^2 + v_y^2} \qquad\qquad (13)$$

$$\alpha = arctan\,(v_y/v_x) \qquad\qquad (14)$$

Dabei ist $\alpha$, ausgehend von der x-Achse, im mathematisch positiven Drehsinn (entgegen dem Uhrzeigersinn) zu messen.

Damit die erfindungsgemäße Vorrichtung ein eindeutiges Ergebnis für die Windgeschwindigkeit liefert, ist außerdem sicherzustellen, dass stets die Bedingungen

$$f_0 > |\Delta f_x|, d.h. f_0 > |v_x|/G \qquad (15)$$

$$f_0 > |\Delta f_y|, d.h. f_0 > |v_y|/G \qquad (16)$$

erfüllt sind.

Weiterhin sind die folgenden Bedingungen einzuhalten:

$$f_0 + |\Delta f_x| < PRF/2 \qquad (17)$$

$$f_0 + |\Delta f_y| < PRF/2 \qquad (18)$$

Die Summe aus der Nullfrequenz und dem Betrag der Frequenzverschiebung muss kleiner sein als die halbe Pulswiederholfrequenz, um dem Nyquist-Shannon-Abtasttheorem zu genügen.

Wenn die Windrichtung bekannt ist, kann auch mit $f_0 = 0$, also mit einem starren Modulator, gearbeitet werden. Die Messung liefert dann die Beträge $|v_x|$ und $|v_y|$ der Komponenten $v_x$ und $v_y$, was in diesem Fall ausreicht.

Sendet das Objekt, dessen Geschwindigkeit zu messen ist, hinreichend viel Licht aus, so ist seine Anregung durch eine Lichtquelle nicht zwingend erforderlich. Es genügt, die Vorrichtung ausschließlich mit den Komponenten des Empfängerpfads auszustatten.

**Beschreibung der Zeichnungen**

Im nachfolgenden Ausführungsbeispiel wird ein vorteilhafter Weg zur Ausführung der Erfindung mithilfe von Zeichnungen erläutert. Es zeigen:

Fig. 1    Eine schematische Darstellung einer beispielhaften Vorrichtung zur Ermittlung einer Geschwindigkeitskomponente eines Objekts, die nicht unter den Schutzbereich der Ansprüche fällt;

Fig. 2    eine schematische Darstellung eines Modulators für die erfindungsgemäße Vorrichtung zur Ermittlung einer Geschwindigkeitskomponente eines Objekts; und

Fig. 3    Eine schematische Darstellung der Ausführungsform dererfindungsgemäßen Vorrichtung zur Ermittlung eines zweidimensionalen Geschwindigkeitsvektors eines Objekts.

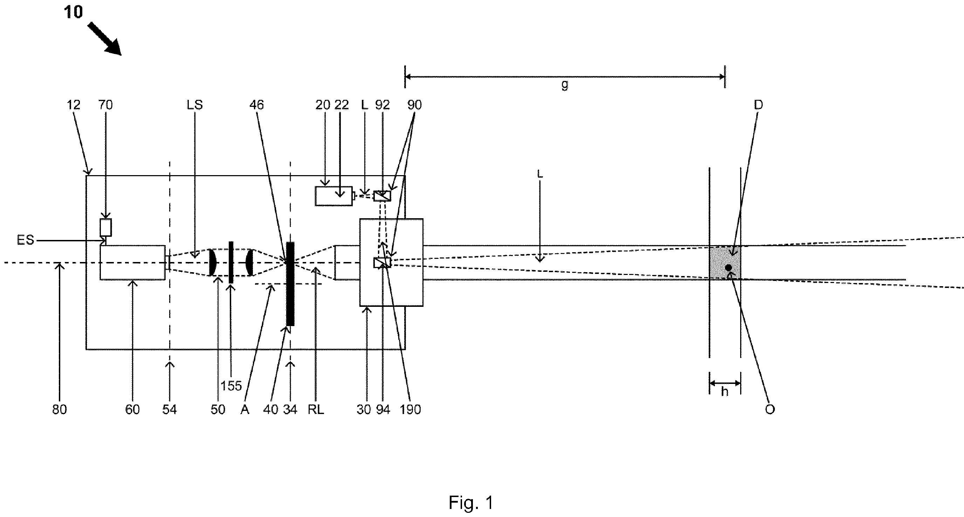

Die in Fig. 1 allgemein mit 10 bezeichnete Vorrichtung ist als LiDAR-System ausgebildet und dient der Windmessung und damit zur Ermittlung einer horizontalen bzw. transversalen Geschwindigkeitskomponente $v_x$ und/oder $v_y$ eines Objekts O, namentlich eines Aerosolpartikels, das sich in einer Messdistanz g relativ zur Vorrichtung 10 in einem Detektionsbereich D bewegt. Das Objekt reflektiert aus einer Lichtquelle 20 stammendes Licht L und erzeugt dabei reflektiertes Licht RL, das von dem Detektionsbereich D ausgeht.

Die Windmessung erfolgt bevorzugt bodengestützt, d.h. die Vorrichtung 10 steht fest auf dem Boden und die Messung wird als vertikale Fernmessung durchgeführt, wobei die horizontalen, d.h. bezogen auf den Lichteinfall in die Vorrichtung transversalen Komponenten $v_x$ und $v_y$ der Windgeschwindigkeit ermittelt werden.

Die Vorrichtung 10 umfasst in einem Gehäuse 12 die Lichtquelle 20, ein Objektiv 30, einen Modulator 40, eine Empfangsoptik 50 und einen Lichtdetektor 60. Ferner weist die Vorrichtung 10 eine Schnittstelle 70 zwischen dem Lichtdetektor 60 und einer (nicht dargestellten) Auswerteeinheit auf. Das Objektiv 30, der Modulator 40, die Empfangsoptik 50 und der Lichtdetektor 60 sind auf einem optischen Empfängerpfad 80 angeordnet.

Neben der Lichtquelle 20 umfasst die Vorrichtung 10 noch eine Spiegeloptik 90 und eine (nicht gezeigte) Abbildungsoptik mit einem (gleichfalls nicht dargestellten) Linsensystem. Die Lichtquelle 20, bevorzugt ein Laser 22, die Abbildungsoptik und die Spiegeloptik 90 liegen auf einem optischen Sendepfad 190.

Man erkennt in Fig. 1, dass der Laser 22, die Spiegeloptik 90 und die Abbildungsoptik in dem Gehäuse 12 der Vorrichtung 10 derart angeordnet sind, dass der Sendepfad 190 und der Empfängerpfad 80 am Ausgang der Vorrichtung 10 und damit am Ausgang des LiDAR-Systems vor dem Objektiv 30 auf einer optischen Achse zusammengeführt sind. Die Spiegeloptik 90 hat hierzu auf dem Sendepfad 190 einen ersten Umlenkspiegel 92, der vor dem Laser 22 angeordnet ist, sowie einen zweiten Umlenkspiegel 94, der auf der optischen Achse des Empfängerpfads 80 positioniert ist. Die Apertur des Objektivs 30 ist deutlich größer als die Abmessung des ebenfalls auf dem Empfängerpfad 80 liegenden zweiten Umlenkspiegels 94.

Das Linsensystem der Abbildungsoptik umfasst beispielsweise zwei Sammellinsen und dient der Aufweitung des von dem Laser 22 emittierten Laserstrahls L auf einen definierten Durchmesser und zur anschließenden Kollimierung dieses Strahls. Der kollimierte Strahl wird mithilfe der Umlenkspiegel 92, 94 entlang der optischen Achse des Empfängerpfads 80 in Richtung des Detektionsbereichs D emittiert. In einer Messdistanz von g = 300 m liegt sein die horizontale Ortsauflösung bestimmender Durchmesser d laut Gleichung (6) beispielsweise bei 0,25 m. Wird beispielsweise die Überlappungsfunktion O(g) auf einen Wert von O(g) = 0,5 eingestellt (bei gleichen Anteilen von opaken und nicht-opaken Bereichen 43, 44), so ist in der Messdistanz g der Durchmesser d des Laserstrahls L gleich dem Durchmesser $d_{Obj}$ des vom Objektiv erfassten Detektionsbereichs und gleich der horizontalen Ortsauflösung.

Werden das Verhältnis zwischen den Anteilen von opaken und nicht-opaken Bereichen 43 44 anders gewählt (abweichend von einem Verältnis 1:1) kann der Wert von O(g) auch größer oder kleiner als 0,5 sein.

Der als Lichtquelle 20 verwendete Laser 22 ist beispielsweise ein monochromatischer Pulslaser mit einer Wellenlänge von $\lambda$ = 532 nm. Ein solcher Laser 22 ist kostengünstig und ermöglicht eine besonders einfache Justage des LiDAR-Systems 10. Die weiteren Laserparameter sind jeweils auf die gewünschte Messdistanz g und das zu vermessende Objekt, hier Aerosolpartikel, abzustimmen.

Das Objektiv, beispielsweise ein Spiegellinsenobjektiv, erfasst das von dem Objekt O im Detektionsbereich D erzeugte reflektierte Licht RL und bildet dieses auf den Modulator 40 ab, wobei das reflektierte Licht RL auf einen ausgewählten ersten Bereich 46 des Modulators 40 fokussiert wird.

Verwendet man beispielsweise ein Objektiv 30 mit einer Apertur D von 35,6 cm (14 inch), einer Brennweite f von 3910 mm und einer Blendenzahl k = f/D = 11, dann ergeben sich für die Schärfentiefe h die in der Tabelle 2 angegebenen Werte. In der rechten Spalte von Tabelle 2 sind die Parameter des Objektivs und die verwendete Laserwellenlänge zusammengefasst.

Tabelle 2: Schärfentiefe in Abhängigkeit von der Gegenstandsweite = Messdistanz g

| Gegenstandsweite g [m] | Schärfentiefe h [m] | Brennweite f [m] |
|---|---|---|
| 50 | 0,05 | 3,91 |
| 100 | 0,2 | Hyperfokaldistanz $d_h$ [m] |
| 150 | 0,45 | 97338,38 |
| 200 | 0,8 | Zerstreuungskreis Z [mm] |
| 250 | 1,26 | 0,01 |
| 300 | 1,83 | Blendenzahl k |
| | | 11 |
| | | Wellenlänge $\lambda$ [nm] |
| | | 532 |

Der Modulator 40 hat auf seiner Oberfläche ein Muster 42 aus opaken und nicht-opaken Linien 43, 44, die ein Gitter bilden. Die Linien 43, 44 sind bevorzugt spiralförmige Linien 41, besonders bevorzugt in Form von archimedischen Spiralen. Dadurch wird das von dem Objekt O reflektierte Licht RL, beim Durchlaufen des Detektionsbereichs D, von dem Modulator 40 in eine Abfolge von Lichtsignalen (LS) moduliert.

Diese Abfolge von Lichtsignalen LS wird von der Empfangsoptik 50 auf den Lichtdetektor 60 abgebildet, der entsprechend eine Abfolge von elektronischen Signalen ES generiert, die über die Schnittstelle 70 an die Auswerteeinheit weitergeleitet werden.

Steht der Modulator 40 fest, d.h. ist dieser im Gehäuse 12 fixiert, kann aus den erfassten elektronischen Signalen ES eine Geschwindigkeitskomponente $v_x$ des erfassten Objekts berechnet werden.

Vorzugsweise ist jedoch der Modulator 40 und damit das Muster 42 rotierend in dem Gehäuse 12 angeordnet, d.h. das Muster 42 des Modulators 40 wird permanent um eine Achse gedreht, die parallel zum Empfängerpfad 80 liegt. Dadurch entsteht eine definierte Linienbewegung in radialer Richtung, die quantitativ auswertbar ist. Auf diese Weise lassen sich zwei horizontale Komponenten $v_x$, $v_y$ der Geschwindigkeit des Objekts O und damit ein zweidimensionaler Geschwindigkeitsvektor ermitteln.

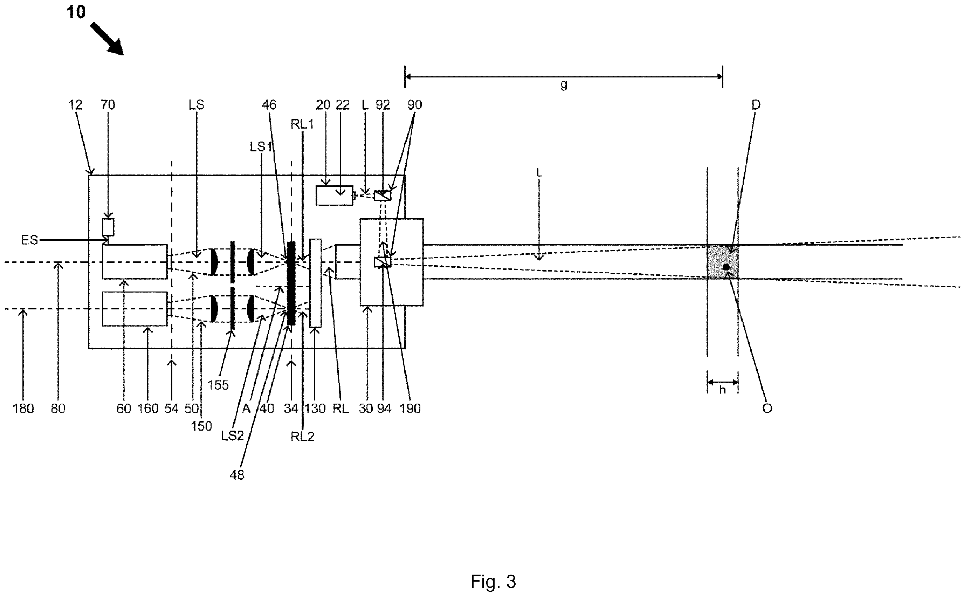

Um ebenfalls zwei horizontale Geschwindigkeitskomponenten eines zweidimensionalen Geschwindigkeitsvektors berechnen zu können, wird - in der Ausführungsform der erfindungsgemäßen Vorrichtung - das von dem Objekt O reflektierte Licht RL von einem Strahlteiler 130 in zwei Teilstrahlen RL1 und RL2 aufgeteilt und von dem Objektiv 30 auf den Modulator 40 abgebildet. Dabei wird - wie Fig. 3 weiter zeigt - jeder Teilstrahl RL1, RL2 auf einen eigenen Bereich 46, 48 auf dem Modulator 40 abgebildet, die sich nicht überlappen. Damit wird der Modulator 40 von den beiden Teilstrahlen RL1, RL2 auf zwei parallelen, räumlich getrennten Strahlwegen durchlaufen. Der Modulator 40 kann auch hier fest montiert angeordnet sein oder gleichmäßig um seine Mittelachse rotieren.

In dem ersten Strahlweg sind die Empfangsoptik 50 und der Lichtdetektor 60 angeordnet. In dem zweiten Strahlweg sind eine zweite Empfangsoptik 150 und ein zweiter Lichtdetektor 160 angeordnet.

Zwischen den Empfangsoptiken 50, 150, die vorzugsweise ein Linsensystem aufweisen, kann noch eine Filtereinheit 155, eine (nicht gezeigte) Irisblende sowie ein (ebenfalls nicht dargestellter) Shutter angeordnet sein. Der Shutter kann geschlossen werden, sobald die eintreffende Strahlung einen vorgegebenen Intensitätsschwellwert überschreitet. Aus Gründen der Übersichtlichkeit sind diese Komponenten nicht dargestellt.

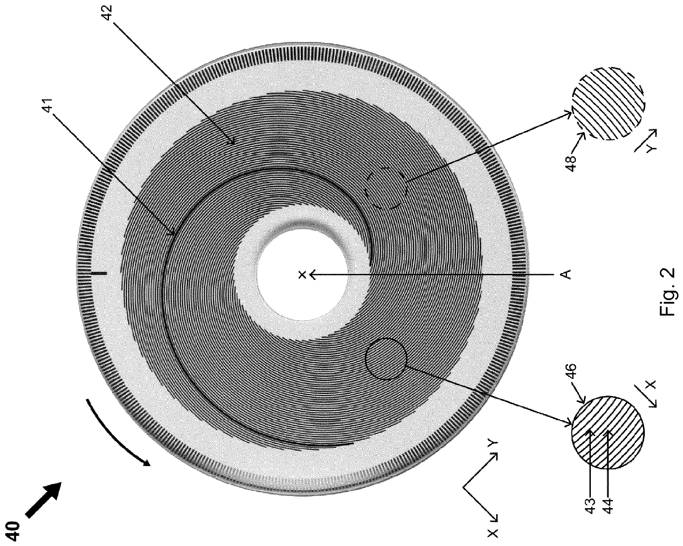

Der in Fig. 2 gezeigte Modulator 40 ist zudem um eine Achse A drehbar gelagert und von einem (nicht dargestellten) Motor angetrieben.

Man erkennt in Fig. 2, dass der Modulator 40 als kreisförmige, quasi-radialsymmetrische Gittermaske (nachfolgend als Maske bezeichnet) ausgeführt ist, die mit einer definiert einstellbaren Drehfrequenz n um eine senkrecht durch ihren Mittelpunkt verlaufende Drehachse rotiert.

Die Maske weist ein Muster 42 aus $N_{Sp}$ = 64 identischen spiralförmigen Linien 41 in Form archimedischer Spiralen auf, die vom inneren Bereich der Maske zu ihrer Außenseite laufen. Die Linien 41 sind als opake Bereiche 43 ausgeführt. Zwischen zwei benachbarten Linien 43 befindet sich jeweils ein nichtopaker Bereich 44, der dieselbe Breite wie die opaken Bereiche 43 hat. Dadurch entsteht ein Gittermuster, das von den Linien 43, 44 gebildet wird. Die Grundgitterkonstante dieses Gitters ist gegeben durch den Abstand der Mitten zweier benachbarter spiralförmiger Linien 43. Sie beträgt beispielsweise $G_0$ = 0,25 mm. Zur Visualisierung ist in Fig. 2 eine willkürlich ausgewählte archimedische Spirale 41 durch eine größere Strichstärke hervorgehoben. Der Außendurchmesser des Musters 42 liegt beispielsweise bei 5 cm, der Innendurchmesser bei 1 cm.

Um die Bedingungen (15) und (16) stets sicher zu erfüllen, ist folgendes Vorgehen geeignet: Es wird eine maximale Windgeschwindigkeit $v_{max}$ festgelegt, die mit dem LiDAR-System 10 eindeutig messbar sein soll. Für die Nullfrequenz $f_0$ ergibt sich dann die Bedingung

$$f_0 > v_{max}/G \qquad\qquad (19)$$

Im vorliegenden Fall ergibt sich daraus eine geeignete Nullfrequenz $f_0$ = 8000 Hz, die realisiert wird, indem der 64 spiralförmige Linien aufweisende Modulator 40 mit einer Drehfrequenz n = 125 Hz rotiert.

Der Modulator 40 rotiert, wie in Fig. 2 durch den Pfeil oben links angezeigt, entgegen dem Uhrzeigersinn, so dass sich die spiralförmigen Linien 41 von außen nach innen bewegen. Das von dem Objekt O reflektierte Licht RL wird von dem Objektiv 30 durch den mit 46 bezeichneten Bereich des Maskenmusters 42 gelenkt, der außerhalb der Maske noch einmal vergrößert dargestellt ist. Im Bereich 46 bewegen sich die spiralförmigen Linien 41 entgegen der x-Achse, wobei das reflektierte Licht RL mit der Nullfrequenz $f_0$ = 8000 Hz moduliert wird.

Das modulierte Licht RL wird, wie Fig. 1 zeigt, als Abfolge von Lichtsignalen LS über die Empfangsoptik 50 auf den Lichtdetektor 60 fokussiert, der durch den (nicht gezeigten) Shutter vor zu starker Belichtung geschützt werden kann. Der Lichtdetektor 60 wandelt die Lichtsignale LS in elektrische Signale ES um, verstärkt diese bei Bedarf und leitet sie an die mit dem Laser synchronisierte Auswerteeinheit weiter.

Die Auswerteeinheit ermittelt die Frequenz $f_x$ des Signalanteils, der durch Rückstreuobjekte O, z. B. Aerosolpartikel, im Detektionsbereich D in der Entfernung g = 300 m hervorgerufen wird und berechnet daraus gemäß Gleichung (9) die transversale Geschwindigkeitskomponente $v_x$.

Um auch die transversale Geschwindigkeitskomponente $v_y$ der Windgeschwindigkeit messen zu können, wird das reflektierte Licht RL durch den Strahlteiler 130 aufgespalten und der zweite Teilstrahl RL2 des reflektierten Lichts RL wird durch einen gegenüber dem Bereich 46 auf der Maske um 90° versetzten Bereich 48 gelenkt, wo es durch die spiralförmigen Linien 41, die sich hier entgegen der y-Richtung bewegen, moduliert wird.

Das so modulierte Signal wird dann von der zweiten Empfangsoptik 150 auf den zweiten Lichtdetektor 160 fokussiert und in derselben Weise, wie sie für die x-Komponente beschrieben wurde, registriert und in der Auswerteeinheit analysiert.

Eine Übersicht der zu erwartenden Frequenzen für eine Geschwindigkeit von 2 m/s und unterschiedliche Messdistanzen g ist in Tabelle 3 gegeben.

Tabelle 3: Zusammenhang von Messdistanz, Vergrößerung, Gitterkonstante und Frequenz

| Messdistanz g [m] | Vergrößerung V | Gitterkonstante G [mm] | Frequenz für 2 m/s |
|---|---|---|---|
| 15 | 2,8 | 0,71 | 10820,56 |

(fortgesetzt)

| Messdistanz g [m] | Vergrößerung V | Gitterkonstante G [mm] | Frequenz für 2 m/s |
|---|---|---|---|
| 30 | 6,7 | 1,67 | 9198,93 |
| 45 | 10,5 | 2,63 | 8761,26 |
| 60 | 14,3 | 3,59 | 8557,68 |
| 75 | 18,2 | 4,55 | 8440,01 |
| 90 | 22,0 | 5,50 | 8363,34 |
| 105 | 25,9 | 6,46 | 8309,43 |
| 120 | 29,7 | 7,42 | 8269,45 |
| 135 | 33,5 | 8,38 | 8238,61 |
| 150 | 37,4 | 9,34 | 8214,11 |
| 165 | 41,2 | 10,30 | 8194,18 |
| 180 | 45,0 | 11,26 | 8177,64 |
| 195 | 48,9 | 12,22 | 8163,69 |
| 210 | 52,7 | 13,18 | 8151,78 |
| 225 | 56,5 | 14,14 | 8141,48 |
| 240 | 60,4 | 15,10 | 8132,49 |
| 255 | 64,2 | 16,05 | 8124,58 |
| 270 | 68,1 | 17,01 | 8117,55 |
| 285 | 71,9 | 17,97 | 8111,28 |
| 300 | 75,7 | 18,93 | 8105,64 |

Die Empfangsoptik 50 gewährleistet stets die Fokussierung des rückgestreuten und von dem Modulator 40 modulierten Lichts auf den Lichtdetektor 60. Sie ist bevorzugt als Linsensystem ausgeführt.

In Tabelle 4 sind noch einmal diejenigen Parameter der vorangehend dargestellten Messung, welche das Rückstreusignal RL bestimmen, zusammengefasst. Tabelle 4 zeigt, dass das Rückstreusignal nur aus wenigen Photonen besteht. Der Abtastbereich, gegeben durch den Bereich der Schärfentiefe von 1,83 m in der Messdistanz g = 300 m, d. h. der Höhenbereich 300 m ± 0,92 m, wird vom Lasersignal innerhalb von 6,1 ns durchlaufen und regt ein in diesem Bereich vorhandenes Aerosolpartikel O zur Rückstreuung an. Für die Rückstreuung ist derselbe Zeitraum von 6,1 ns berücksichtigen, sodass das Rückstreusignal in einem Zeitintervall von 12,2 ns Länge zu detektieren ist. In diesem Zeitraum, der dem Bereich der Schärfentiefe (1,83 m) zuzuordnen ist, werden im Durchschnitt 58,1 Photonen registriert, was 3,2 Photonen/ns entspricht. Dieses sehr schwache Rückstreusignal wird durch den Lichtdetektor 60, beispielsweise ein Photomultiplier, in ein elektrisches Signal umgewandelt, verstärkt und der Auswerteeinheit zugeführt.

Tabelle 4: Werte der Parameter des Rückstreusignals

| Parameter | Wert | Einheit |
|---|---|---|
| Transmissionsverluste $\eta_t$ | 0,8 | |
| Empfangsverluste $\eta_x$ | 0,7 | |
| Pulsenergie Ex | 30 | $\mu$J |
| Pulswiederholfrequenz PRF | 50 | kHz |
| Mittlere Laserleistung $P_{average}$ | 1,5 | W |
| Überlappungsfunktion O(g) | 0,5 | |
| Messdistanz g | 300 | m |
| Atmosphärische Transmissionsverluste T | 95,1 | % |

(fortgesetzt)

| Parameter | Wert | Einheit |
|---|---|---|
| Rückstreukoeffizient $\beta$ | $10^{-6}$ | $m^{-1}sr^{-1}$ |
| Apertur D | 35 | cm |
| Fläche der Apertur $A_R$ | 962,1 | cm2 |
| Über die Apertur gesammelte Leistung Ps | 1.217,63 | pW |
| Wellenlänge $\lambda$ | 532 | nm |
| Photonenfluss | 3,2 | Photonen/ns |
| Abtastbereich | 1,83 | m |
| Photonen im Abtastbereich | 39,54 | Photonen/1,83 m |

Beispielsweise kann innerhalb der Vorrichtung 10 eine Lichtquelle 20 in Form eines monochromatischen Pulslasers 22 mit einer Wellenlänge von $\lambda$ = 532 nm verwendet werden, der eine besonders einfache Justage des LiDAR-Systems erlaubt.

Der Pulslaser 22 hat zudem die folgenden auf eine gewünschte maximale Messdistanz von g = 300 m und auf ein ausgewähltes Objektiv abgestimmten Parameter:

- Pulswiederholfrequenz (Repetitionsrate) des Lasers: PRF = 50 kHz,
- Pulsdauer der Laserpulse: $\Theta P$ = 800 ps,
- mittlere Laserleistung: Paverage = 1,5 W,
- Energie je Laserpuls: Ex = 30 $\mu$J

Zwischen der Pulsdauer $\Theta P$ und der vertikalen Ortsauflösung s besteht der Zusammenhang s = ½ · c · $\Theta P$. Der Faktor ½ ergibt sich, weil die Messdistanz g zweimal durchlaufen wird, vom Laserpuls und von dem weitaus schwächeren Rückstreupuls, der registriert wird.

Die gewählte Pulsdauer $\Theta P$ = 800 ps gewährleistet eine vertikale Ortsauflösung s von 12 cm, sodass die vorgegebene vertikale Ortsauflösung von 15 cm erreicht wird. In entsprechender Weise erfolgt die Einstellung auf die Messdistanz g über die Pulslaufzeit tP: g = ½ · c · tP.

Damit können mit der Vorrichtung 10 beispielsweise Windgeschwindigkeiten von bis zu 20 m/s in mehreren Detektionsbereichen gemessen werden, die sich in Messdistanzen (Höhen) g zwischen 50 m und 300 m befinden.

Man erkennt, dass die erfindungsgemäße Vorrichtung 10 gegenüber den Systemen und Vorrichtungen aus dem Stand der Technik deutliche Vorteile hat:

- Die Vorrichtung 10 hat gegenüber EP 2 062 058 B1 einen deutlich geringeren Energieverlust des Lichtstrahls.
- Der Aufbau des Sendepfads 190 und des Empfängerpfads 80 sind deutlich vereinfacht.
- Der ausgesendete Lichtstrahl L muss nicht mittels mehrerer aufeinanderfolgender Linsen geformt und angepasst werden. Dies führt zu einem deutlich robusteren System.
- Es entstehen keine durch die Maske 40 erzeugten Interferenzen.
- Das Maskensignal kann auf jede empfangene Lichtreflexion moduliert werden.
- Die Brennweite des Objektivs 30 ist anpassbar, wodurch die Vergrößerung des Gitters gesteuert werden kann.
- Die Detektion vereinfacht sich durch die höhere Strahlungsleistung.
- Das System 10 ist leichter zu reproduzieren, weil die Kalibrierung der Empfängeroptik 50 im Vergleich zur Sendeoptik mit deutlich weniger Aufwand verbunden ist. Die Herstellung der Vorrichtung ist dadurch im Vergleich zu den herkömmlichen Geräten wirtschaftlicher.
- Durch die größere Option zur Parametrisierung kann das System 10 rasch und einfach für geplante Messdistanzen ausgelegt werden.
- Die Größe des Detektionsbereichs D wird durch die Optik definiert und kann daher selbst in großer Distanz sehr klein dimensioniert werden.

Man erkennt ferner, dass die Erfindung eine Vorrichtung 10 zur Ermittlung einer Geschwindigkeitskomponente $v_x$, $v_y$ eines Objekts O betrifft, das sich in einer Messdistanz g relativ zur Vorrichtung 10 in einem Detektionsbereich D bewegt und aus einer Lichtquelle 20 stammendes Licht L reflektiert, wobei das Objekt O reflektiertes Licht RL erzeugt, das von dem Detektionsbereich D ausgeht. Die Vorrichtung 10 hat hierzu ein Objektiv 30, einen Modulator 40, eine Empfangsoptik 50 und einem Lichtdetektor 60, wobei das Objektiv 30 das von dem Objekt O im Detektionsbereich D erzeugte reflektierte Licht RL erfasst und auf den Modulator 40 abbildet, wobei der Modulator 40 das reflektierte Licht RL in eine Abfolge von Lichtsignalen LS moduliert, wobei die Empfangsoptik 50 die von dem Modulator 40 erzeugte Abfolge von Lichtsignalen LS auf den Lichtdetektor 60 abbildet, und wobei der Lichtdetektor 60 die Abfolge von Lichtsignalen LS in eine Abfolge von elektronischen Signalen ES umwandelt. Die Vorrichtung hat ferner eine Schnittstelle 70, welche die von dem Lichtdetektor 60 erzeugte Abfolge von elektronischen Signalen ES an eine Auswerteeinheit weiterleitet. Mit dieser Vorrichtung 10, die ein LiDAR-System zur Fernmessung mindestens einer transversalen Geschwindigkeitskomponente eines Objekts O in einem 3-dimensionalen Raum bildet, ist die Richtung der Messung frei wählbar. Insbesondere erlaubt die Vorrichtung 10 die Messung der Geschwindigkeit von in Fluiden mitbewegten driftenden Objekten, wodurch eine bodengestützte Messung der Windgeschwindigkeit in verschiedenen Höhen mit hoher örtlicher und zeitlicher Auflösung sowie eine berührungslose Messung der Strömungsgeschwindigkeit in Flüssigkeiten ermöglicht wird. Ebenso kann die Geschwindigkeit von Objekten O gemessen werden, die sich unabhängig von Fluiden bewegen.

Die Erfindung ist nicht auf eine der vorgenannten Ausführungsformen beschränkt. Beispielsweise ist der Modulator 40 vorzugsweise mit einem Muster 42 aus archimedischen Spiralen 41 versehen. Es können jedoch auch andere Muster und Strukturen verwendet werden, z.B. andere Spiralarten oder Gitterstrukturen.

**Formelzeichen**

| | |
|---|---|
| $A_R$ | Fläche der Apertur D des Objektivs: $A_R = (1/4)\pi D^2$ |
| b | Öffnungsdurchmesser der Irisblende |
| $b_{nop}$ | Breite der nichtopaken Linien des Modulators |
| $b_{op}$ | Breite der opaken Linien des Modulators |
| c | Lichtgeschwindigkeit im jeweiligen Medium |
| d | Durchmesser des Laserstrahls (als Funktion der Messdistanz g) |
| D | Apertur des Objektivs |
| $d_f$ | Schärfentiefe: Distanz zum Fernpunkt |
| $d_n$ | Schärfentiefe: Distanz zum Nahpunkt |
| $d_0$ | Durchmesser des auslaufenden Laserstrahls nach der Formung |
| $d_{Obj}$ | Durchmesser des vom Objektiv erfassten Detektionsbereichs |
| $E_x$ | Pulsenergie |
| $f_0$ | Frequenz, mit der sich die Gitterlinien des Modulators bewegen (Nullfrequenz) |
| f | Brennweite des Objektivs |
| $f_x$ | gemessene Frequenz des Rückstreusignals in x-Richtung |
| $f_y$ | gemessene Frequenz des Rückstreusignals in y-Richtung |
| $\Delta f_x$ | Frequenzverschiebung von $f_x$ gegenüber der Nullfrequenz |
| $\Delta f_y$ | Frequenzverschiebung von $f_y$ gegenüber der Nullfrequenz |
| g | Messdistanz vom Objektiv zum Detektionsbereich |
| G | Gitterkonstante des in den Detektionsbereich rückprojizierten Bildes des Modulators |
| $G_0$ | Grundgitterkonstante des Modulators |
| h | Schärfentiefe im Detektionsbereich |
| n | Drehfrequenz des Modulators |
| $N_{Sp}$ | Anzahl der Spiralen des Modulators |
| O(g) | Überlappungsfunktion |
| $P_{average}$ | mittlere Leistung des Lasers |
| Ps | gesammelte Leistung des Rückstreusignals über die Apertur d des Objektivs |
| PRF | Pulswiederholfrequenz (Repetitionsrate) des Lasers |
| s | vertikale Ortsauflösung |
| $t_P$ | Pulslaufzeit |
| T | Atmosphärische Transmissionsverluste |
| v | Geschwindigkeitsvektor eines Objekts im zwei- bzw. dreidimensionalen Raum |
| \|v\| | Betrag der Geschwindigkeit v eines Objekts |
| $v_x$, $v_y$ | Geschwindigkeitskomponenten eines Objekts quer zur Messrichtung (transversale Geschwindigkeitskomponenten) |
| $v_z$ | Geschwindigkeitskomponente eines Objekts in Messrichtung (longitudinale Geschwindigkeitskomponente) |
| $v_{max}$ | Maximalwert der zu messenden Geschwindigkeit |

| V | Vergrößerungsfaktor $G/G_0$ |
| $\alpha$ | Richtung der Geschwindigkeit v eines Objekts |
| $\beta$ | Rückstreukoeffizient |
| $\eta_t$ | Transmissionsverluste |
| $\eta_x$ | Empfangsverluste |
| $\lambda$ | Wellenlänge der Lichtquelle |
| $\varphi.$ | Divergenzwinkel des geformten Laserstrahls |
| $\Theta_P$ | Pulsdauer der Laserpulse (bei Verwendung eines Pulslasers) |

**Bezugszeichen**

| 10 | Vorrichtung |
| 12 | Gehäuse |
| 20 | Lichtquelle |
| 22 | Laser |
| 30 | Objektiv |
| 34 | Brennebene |
| 40 | Modulator |
| 41 | spiralförmige Linie |
| 42 | Muster |
| 43 | opake(r) Linie/Bereich |
| 44 | nicht-opake(r) Linie/Bereich |

| 46 | erster Bereich des Modulators |
| 48 | zweiter Bereich des Modulators |
| 50 | Empfangsoptik |
| 54 | Brennebene |
| 60 | Lichtdetektor |
| 70 | Schnittstelle |
| 80 | optischer Empfängerpfad |
| 90 | Spiegeloptik |
| 92 | erster Umlenkspiegel |
| 94 | zweiter Umlenkspiegel |
| 130 | Strahlteiler |
| 150 | zweite Empfangsoptik |
| 155 | Filtereinheit |
| 160 | zweiter Lichtdetektor |
| 180 | zweiter optischer Empfängerpfad |
| 190 | optischer Sendepfad |

| A | Achse |
| D | Detektionsbereich |
| ES | Elektronische Signale |

| L | Licht |
| LS | Lichtsignale |
| LS1 | Lichtsignale |
| LS2 | Lichtsignale |
| O | Objekt |
| RL | Reflektiertes Licht |
| RL1 | Teilstrahl |
| RL2 | Teilstrahl |

**Patentansprüche**

1.  Vorrichtung (10) zur Ermittlung einer Geschwindigkeitskomponente ($v_x$, $v_y$) eines Objekts (O), das sich in einer Messdistanz (g) relativ zur Vorrichtung (10) in einem Detektionsbereich (D) bewegt und aus einer Lichtquelle (20) stammendes Licht (L) reflektiert, wobei das Objekt (O) reflektiertes Licht (RL) erzeugt, das von dem Detektionsbereich (D) ausgeht,

    a) mit einem Objektiv (30), einem Modulator (40), einer Empfangsoptik (50) und einem Lichtdetektor (60),
    b) wobei das Objektiv (30), der Modulator (40), die Empfangsoptik (50) und der Lichtdetektor (60) auf einem optischen Empfängerpfad (80) angeordnet sind,
    c) wobei das Objektiv (30) das von dem Objekt (O) im Detektionsbereich (D) erzeugte reflektierte Licht (RL) erfasst und auf den Modulator (40) abbildet,
    d) wobei der Modulator (40) das reflektierte Licht (RL) in eine Abfolge von Lichtsignalen (LS) moduliert,
    e) wobei die Empfangsoptik (50) die von dem Modulator (40) erzeugte Abfolge von Lichtsignalen (LS) auf den Lichtdetektor (60) abbildet, und
    f) wobei der Lichtdetektor (60) die Abfolge von Lichtsignalen (LS) in eine Abfolge von elektronischen Signalen (ES) umwandelt, und
    g) mit einer Schnittstelle (70), welche die von dem Lichtdetektor (60) erzeugte Abfolge von elektronischen Signalen (ES) an eine Auswerteeinheit weiterleitet,

    **dadurch gekennzeichnet, dass**

    zwischen dem Objektiv (30) und dem Modulator (40) ein Strahlteiler (130) angeordnet ist, der das von dem Objekt (O) reflektierte Licht (RL) in zwei Teilstrahlen (RL1, RL2) aufteilt, wobei das Objektiv (30) die von dem Strahlteiler (130) erzeugten Teilstrahlen (RL1, RL2) in einen ersten Bereich (46) und in einen zweiten Bereich (48) des Modulators (40) abbildet, wobei sich die Bereiche (46, 48) nicht überlappen, und
    dass die Vorrichtung eine zweite Empfangsoptik (150) und einen zweiten Lichtdetektor (160) aufweist, der Modulator (40) die Teilstrahlen (RL1, RL2) in eine erste und eine zweite Abfolge von Lichtsignalen (LS1, LS2) moduliert, wobei die Empfangsoptik (50) die von dem ersten Bereich (46) des Modulators (40) erzeugte Abfolge der ersten Lichtsignale (LS1) auf den Lichtdetektor (60) abbildet und die zweite Empfangsoptik (150) die von dem zweiten Bereich (48) des Modulators (40) erzeugte Abfolge der zweiten Lichtsignale (LS2) auf den zweiten Lichtdetektor (160) abbildet, und
    dass die zweite Empfangsoptik (150) und der zweite Lichtdetektor (160) auf einem zweiten optischen Empfängerpfad (180) angeordnet sind, wobei der Empfängerpfad (80) und der zweite Empfängerpfad (180) parallel angeordnet sind.

2.  Vorrichtung nach Anspruch 1, **dadurch gekennzeichnet, dass** der Empfängerpfad (80) innerhalb der Vorrichtung (10) ausgebildet ist.

3.  Vorrichtung nach Anspruch 1 oder 2, **dadurch gekennzeichnet, dass** das Objektiv (30) den Detektionsbereich (D) mit einer definierten Schärfentiefe (h) auf dem Modulator (40) abbildet.

4.  Vorrichtung nach einem der Ansprüche 1 bis 3, **dadurch gekennzeichnet, dass** das Objektiv (30) das von dem Objekt (O) reflektierte Licht (RL) auf einen definierten Bereich (46, 48) des Modulators (40) abbildet.

5.  Vorrichtung nach einem der Ansprüche 1 bis 4, **dadurch gekennzeichnet, dass** der Modulator (40) mit einem Muster (42) aus sich abwechselnden opaken und nicht-opaken Linien (43, 44) versehen ist.

6.  Vorrichtung nach Anspruch 5, **dadurch gekennzeichnet, dass** die opaken und nichtopaken Linien (43, 44) in Form von archimedischen Spiralen ausgebildet sind.

7.  Vorrichtung nach einem der Ansprüche 1 bis 6, **dadurch gekennzeichnet, dass** der Modulator (40) innerhalb der Vorrichtung (10) fixiert ist oder um eine Achse (A) drehbar gelagert ist.

8.  Vorrichtung nach einem der Ansprüche 1 bis 7, **dadurch gekennzeichnet, dass** der Lichtdetektor (60) in der Brennebene (54) der Empfangsoptik (50) angeordnet ist.

9.  Vorrichtung nach einem der Ansprüche 1 bis 8, **dadurch gekennzeichnet, dass** die Lichtquelle (20) für das zu reflektierende Licht (L) ein Laser (22) oder eine inkohärente Lichtquelle ist.

10. Vorrichtung nach einem der Ansprüche 1 bis 9, **dadurch gekennzeichnet, dass** eine Spiegeloptik (90) vorgesehen ist, welche das von der Lichtquelle (20) ausgehende Licht (L) in Richtung Detektionsbereich (D) und in die optische Achse des Objektivs (30) lenkt.

11. Vorrichtung nach Anspruch 10, **dadurch gekennzeichnet, dass** die Lichtquelle (20), die Abbildungsoptik und die Spiegeloptik (90) auf einem optischen Sendepfad (190) liegen, wobei die Lichtquelle (20), die Abbildungsoptik und/oder die Spiegeloptik (90) innerhalb der Vorrichtung (10) angeordnet sind.

12. Vorrichtung nach einem der Ansprüche 1 bis 11, **dadurch gekennzeichnet, dass** die Auswerteeinheit aus den Abfolgen der elektronischen Signalen (ES) die Geschwindigkeitskomponenten ($v_x$, $v_y$) des Objekts (O) berechnet.

**Claims**

1. Apparatus (10) for ascertaining a velocity component ($v_x$, $v_y$) of an object (O) that moves in a detection region (D) at a measurement distance (g) relative to the apparatus (10) and reflects light (L) originating from a light source (20), wherein the object (O) generates reflected light (RL) that emanates from the detection region (D),

   a) comprising a lens (30), a modulator (40), a receiving optical unit (50) and a light detector (60),
   b) wherein the lens (30), the modulator (40), the receiving optical unit (50) and the light detector (60) are arranged on an optical receiver path (80),
   c) wherein the lens (30) captures the reflected light (RL) generated by the object (O) in the detection region (D) and images it onto the modulator (40),
   d) wherein the modulator (40) modulates the reflected light (RL) into a sequence of light signals (LS),
   e) wherein the receiving optical unit (50) images the sequence of light signals (LS) generated by the modulator (40) onto the light detector (60), and
   f) wherein the light detector (60) converts the sequence of light signals (LS) into a sequence of electronic signals (ES), and
   g) comprising an interface (70), which forwards the sequence of electronic signals (ES) generated by the light detector (60) to an evaluation unit

   **characterized in that**

   a beam splitter (130) is arranged between the lens (30) and the modulator (40) and splits the light (RL) reflected from the object (O) into two partial beams (RL1, RL2), wherein the lens (30) images the partial beams (RL1, RL2) generated by the beam splitter (130) into a first region (46) and into a second region (48) of the modulator (40), wherein the regions (46, 48) do not overlap, and
   **in that** the apparatus has a second receiving optical unit (150) and a second light detector (160), the modulator (40) modulates the partial beams (RL1, RL2) into a first and a second sequence of light signals (LS1, LS2), wherein the receiving optical unit (50) images the sequence of the first light signals (LS1) generated by the first region (46) of the modulator (40) onto the light detector (60) and the second receiving optical unit (150) images the sequence of the second light signals (LS2) generated by the second region (48) of the modulator (40) onto the second light detector (160), and **in that** the second receiving optical unit (150) and the second light detector (160) are arranged on a second optical receiver path (180), wherein the receiver path (80) and the second receiver path (180) are arranged parallel to each other.

2. Apparatus according to Claim 1, **characterized in that** the receiver path (80) is realized within the apparatus (10).

3. Apparatus according to Claim 1 or 2, **characterized in that** the lens (30) images the detection region (D) with a defined depth of field (h) on the modulator (40).

4. Apparatus according to any of Claims 1 to 3, **characterized in that** the lens (30) images the light (RL) reflected from the object (O) onto a defined region (46, 48) of the modulator (40).

5. Apparatus according to any of Claims 1 to 4, **characterized in that** the modulator (40) is provided with a pattern (42) of alternating opaque and non-opaque lines (43, 44).

**6.** Apparatus according to Claim 5, **characterized in that** the opaque and non-opaque lines (43, 44) are realized in the form of Archimedean spirals.

**7.** Apparatus according to any of Claims 1 to 6, **characterized in that** the modulator (40) is fixed within the apparatus (10) or is mounted rotatably about an axis (A) .

**8.** Apparatus according to any of Claims 1 to 7, **characterized in that** the light detector (60) is arranged in the focal plane (54) of the receiving optical unit (50) .

**9.** Apparatus according to any of Claims 1 to 8, **characterized in that** the light source (20) for the light (L) to be reflected is a laser (22) or an incoherent light source.

**10.** Apparatus according to any of Claims 1 to 9, **characterized in that** a mirror optical unit (90) is provided, which directs the light (L) emanating from the light source (20) in the direction of the detection region (D) and into the optical axis of the lens (30).

**11.** Apparatus according to Claim 10, **characterized in that** the light source (20), the imaging optical unit and the mirror optical unit (90) lie on an optical transmission path (190), wherein the light source (20), the imaging optical unit and/or the mirror optical unit (90) are/is arranged within the apparatus (10).

**12.** Apparatus according to any of Claims 1 to 11, **characterized in that** the evaluation unit calculates the velocity components ($v_x$, $v_y$) of the object (O) from the sequences of the electronic signals (ES).

**Revendications**

**1.** Dispositif (10) de détermination d'une composante de vitesse (Vx, Vy) d'un objet (O) qui se déplace à une distance de mesure (g) par rapport au dispositif (10) dans une zone de détection (D) et qui réfléchit une lumière (L) provenant d'une source de lumière (20), l'objet (O) générant une lumière réfléchie (RL) qui émane de la zone de détection (D),

a) ledit dispositif comprenant un objectif (30), un modulateur (40), une optique de réception (50) et un détecteur de lumière (60),
b) l'objectif (30), le modulateur (40), l'optique de réception (50) et le détecteur de lumière (60) étant disposés sur un trajet de réception optique (80),
c) l'objectif (30) capturant la lumière réfléchie (RL) générée par l'objet (O) dans la zone de détection (D) et la reproduisant sur le modulateur (40),
d) le modulateur (40) modulant la lumière réfléchie (RL) suivant une séquence de signaux lumineux (LS),
e) l'optique de réception (50) reproduisant sur le détecteur de lumière (60) la séquence de signaux lumineux (LS) générés par le modulateur (40), et
f) le détecteur de lumière (60) convertissant la séquence de signaux lumineux (LS) en une séquence de signaux électroniques (ES), et
g) ledit dispositif comprenant une interface (70) qui transmet à une unité d'évaluation la séquence de signaux électroniques (ES) générés par le détecteur de lumière (60),

**caractérisé en ce que**

un diviseur de faisceau (130), qui divise la lumière (RL) réfléchie par l'objet (O) en deux faisceaux partiels (RL1, RL2), est disposé entre l'objectif (30) et le modulateur (40),
l'objectif (30) reproduisant les faisceaux partiels (RL1, RL2) générés par le diviseur de faisceau (130) dans une première zone (46) et dans une deuxième zone (48) du modulateur (40), les zones (46, 48) ne se chevauchant pas, et
le dispositif comporte une deuxième optique de réception (150) et un deuxième détecteur de lumière (160), le modulateur (40) modulant les faisceaux partiels (RL1, RL2) en une première et une deuxième séquence de signaux lumineux (LS1, LS2), l'optique de réception (50) reproduisant sur le détecteur de lumière (60) la séquence des premiers signaux lumineux (LS1) qui est générée par la première zone (46) du modulateur (40) et la deuxième optique de réception (150) reproduisant sur le deuxième détecteur de lumière (160) la séquence des deuxièmes signaux lumineux (LS2) qui est générée par la deuxième zone (48) du modulateur (40), et
la deuxième optique de réception (150) et le deuxième détecteur de lumière (160) sont disposés sur un deuxième trajet de réception optique (180), le trajet de réception (80) et le deuxième trajet de réception (180) étant disposés en parallèle.

2. Dispositif selon la revendication 1, **caractérisé en ce que** le trajet de réception (80) est formé à l'intérieur du dispositif (10).

3. Dispositif selon la revendication 1 ou 2, **caractérisé en ce que** l'objectif (30) reproduit la zone de détection (D) avec une profondeur de champ définie (h) sur le modulateur (40).

4. Dispositif selon l'une des revendications 1 à 3, **caractérisé en ce que** l'objectif (30) reproduit la lumière (RL), qui est réfléchie par l'objet (O), sur une zone définie (46, 48) du modulateur (40).

5. Dispositif selon l'une des revendications 1 à 4, **caractérisé en ce que** le modulateur (40) est pourvu d'un motif (42) de lignes opaques et non opaques alternées (43, 44).

6. Dispositif selon la revendication 5, **caractérisé en ce que** les lignes opaques et non opaques (43, 44) sont conçues sous la forme de spirales d'Archimède.

7. Dispositif selon l'une des revendications 1 à 6, **caractérisé en ce que** le modulateur (40) est fixé à l'intérieur du dispositif (10) ou est monté de manière rotative sur un axe (A).

8. Dispositif selon l'une des revendications 1 à 7, **caractérisé en ce que** le détecteur de lumière (60) est disposé dans le plan focal (54) de l'optique de réception (50).

9. Dispositif selon l'une des revendications 1 à 8, **caractérisé en ce que** la source de lumière (20) destinée à la lumière à réfléchir (L) est un laser (22) ou une source de lumière incohérente.

10. Dispositif selon l'une des revendications 1 à 9, **caractérisé en ce qu'**une optique à miroir (90) est prévue qui dévie la lumière (L) issue de la source de lumière (20) en direction de la zone de détection (D) et suivant l'axe optique de l'objectif (30).

11. Dispositif selon la revendication 10, **caractérisé en ce que** la source de lumière (20), l'optique de reproduction et l'optique à miroir (90) sont situées sur un trajet d'émission optique (190), la source de lumière (20), l'optique de reproduction et/ou l'optique à miroir (90) étant disposées à l'intérieur du dispositif (10).

12. Dispositif selon l'une des revendications 1 à 11, **caractérisé en ce que** l'unité d'évaluation calcule les composantes de vitesse (Vx, Vy) de l'objet (O) à partir des séquences des signaux électroniques (ES).

Fig. 1

Fig. 2

Fig. 3

**10**

ES

12  70  LS  46  RL1  20 22  L 92  90  D

LS1

g

L

21

EP 3 827 268 B1

180  80  60 160 54 50  A  40 34 130  RL  30 94  190  O

150  LS2  RL2

155  h

48

**EP 3 827 268 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2062058 A1
- US 2002093641 A1
- DE 2248542 A1

- GB 1118879 A
- EP 2062058 B1

**In der Beschreibung aufgeführte Nicht-Patentliteratur**

- Laser Remote Sensing. CRC Press, 2005, 487